# EUROPEAN PATENT SPECIFICATION

(11) **EP 1 809 923 B1**
(45) Date of publication and mention of the grant of the patent: **16.10.2013**
(21) Application number: 05797954.4
(22) Date of filing: 25.10.2005
(51) Int. Cl.: F16G 5/16, F16H 9/24

(54) **TRANSMISSION WITH CONVEX PULLEY SHEAVES AND A DRIVE BELT**
GETRIEBE MIT KONVEXEN ANTRIEBSSCHEIBEN UND ANTRIEBSRIEMEN
TRANSMISSION AVEC GAINES DE POULIE CONVEXES ET COURROIE D' ENTRAÎNEMENT

(30) Priority: 03.11.2004 NL 1027411
(43) Date of publication of application: 25.07.2007
(73) Proprietor: ROBERT BOSCH GMBH, 70442 Stuttgart (DE)
(72) Inventor: VAN SPIJK, Johannes, Gerardus, Ludovicus, Maria, NL-5151 MR Drunen (NL); VAN DER LEEST, Adrianus, Johannes, Wilhelmus, NL-5388 RX Nistelrode (NL); BRANDSMA, Arjen, NL-5045 WN Tilburg (NL)
(74) Representative: Plevier, Gabriel Anton Johan Maria
(86) International application number: PCT/NL2005/000763
(87) International publication number: WO 2006/049493

(56) References cited:
- EP-A- 1 221 563
- EP-A- 1 441 151
- EP-B- 1 218 654
- DE-A1- 10 062 463
- US-A1- 2002 151 399
- PATENT ABSTRACTS OF JAPAN vol. 012, no. 272 (M-724), 28 July 1988 (1988-07-28) -& JP 63 053352 A (FUJI HEAVY IND LTD), 7 March 1988 (1988-03-07) cited in the application

## Description

The present invention relates to a continuously variable transmission provided with a pulley with convex sheaves and with a drive belt, as described in the preamble of Claim 1. The design and operation of a transmission of this type are deemed to be known, for example from European Patent 1218654, which also shows one of the known types of drive elements, such as drive belts and chains. The drive belt shown in EP-A-1218654 is generally known as the Van Doorne push belt and is described in more detail, for example, in patent publication EP-A-1221563.

This push belt is characterized, inter alia, by a series of transverse elements, each comprising a lower body, a middle body and an upper body. The lateral sides or flanks of the lower body are in this case intended for contact with the sheaves of a driving or primary pulley and those of a driven or secondary pulley of the transmission. Part of the top side of the lower body, facing the top body, i.e. a radially outwardly oriented edge thereof, forms a supporting surface for a continuous tensioning element, which is generally formed by one or more groups of a number of nested, flat, relatively thin rings made from metal. The top body of the transverse elements is located radially outside the tensioning element, while the middle body connects the lower body and top body to one another at the level of the tensioning element. The transverse elements are accommodated in the drive belt such that they can move with respect to the circumferential direction of the tensioning element.

Generally, the lower body of the transverse elements is provided with what is known as a tilted edge, namely a generally slightly rounded transition between a top side of the transverse element of constant thickness and a tapering underside which extends in the front or rear surface between the flanks. The tilted edge permits a tilting or rolling movement between adjacent transverse elements, with the drive belt following a curved path over its circumferential direction, as is necessary at the location of the pulleys.

The Van Doorne push belt includes a number of the said transverse elements which is such that the entire circumference of the tensioning element is filled, with a continuous series of transverse elements clamped between the sheaves of the two pulleys, so that a frictional force can be transmitted between them. Partly as a result of this, a driving power can be transmitted between the pulleys of the transmission, by virtue of the transverse elements advancing one another, with support and guidance from the tensioning element.

Drive belts of this type are in widespread use in a transmission with two pulleys, each provided with two sheaves in the form of straight truncated cones, which together form a V-shaped groove in which the drive belt is held and on which at least one sheave is held such that it can move in the axial direction with respect to the respective other or fixed sheave and a pulley axle of the pulley, in order to allow a running radius of the drive belt between the pulley sheaves and therefore the transmission ratio of the transmission, which latter is given by the quotient of the running radii of the drive belt at the location of the two pulleys, to be changed. Various measures are known for overcoming the adverse effect of this, namely the fact that the V-grooves of the pulleys are at least slightly axially offset with respect to one another, with the result that at least some degree of what is known as skew running is imposed on the drive belt, the degree of which skew running varies as a function of the transmission ratio. Measures of this type are generally realized in the drive belt itself, but may also form part of the transmission. An example of this latter option is given by Japanese Patent publication JP-A-63-053352 and by German Patent publication DE-10062463, according to which the conical surface of at least one sheave of the two pulleys is of spherical or convex design. In this context, the terms spherical or convex means that the straight cone shape of the surface of a pulley sheave is replaced by a cone shape which is slightly convexly curved at least in the radial direction. The cone surface is also referred to as the drive belt running surface, or the running surface for short, of a pulley sheave.

A further example of a transmission wherein both the drive belt and the pulley sheaves are provided with mutual contact surfaces that are convexly curved is provided by the European patent publication EP-A-1 441 151. According to this patent publication the said contact surfaces are shaped as circle segments, whereof the respective radii of curvature are mutually correlated.

Although the known Van Doorne push belt has long been provided and used with straight flanks, it is also known for the push belt, or at least the transverse elements thereof, to be provided with a flank which is curved at least in the radial or height direction, in order to allow it to optimally interact with the spherical shape in the running surface of the pulleys, as described for example in the abovementioned German Patent Publication. This means that a range of what are known as pulley angles, defined with respect to the radial direction perpendicular to the pulley axle, which is used for the convex running surfaces of the pulley sheaves of the pulleys of the transmission is also to be found in the curvature of the said flanks.

One problem of the known transmission is that in operation the transverse elements tend to tilt between the sheaves of a pulley about an imaginary, substantially axially oriented axis between the two points of contact on either side of the transverse element with the pulley sheaves. This effect is caused by a difference between the radial position of these contact points and the radial position of the tilted edge where a pushing force engages between the adjacent transverse elements, with the result that this pushing force exerts a moment (of force) with respect to the said imaginary axis of rotation.

However, a tilting movement of this type would be disadvantageous for the efficiency of the transmission, but can also lead to damage and possibly premature failure of the drive belt. In order therefore to avoid the tilting movement, or at least to limit it, one main surface of each transverse element, for example the rear surface, is provided with a recess, and the respective other main surface thereof, for example the front surface, is provided with a projection, with the projection of one transverse element in each case being received in the recess in an adjacent transverse element. This limits the freedom of movement of the transverse elements with respect to one another and more particularly neutralizes the abovementioned tendency to tilting. The size of the projection, which is to be understood as meaning its cross section, should in this case be sufficient to be able to absorb the couple of forces between the pushing force and the frictional forces without the projection breaking off or being damaged in some other way. However, a larger projection is more difficult to produce and moreover means that other dimensions of the transverse element also have to be correspondingly larger, which has an adverse effect both on the consumption of material in the transverse elements and on the total weight of the drive belt.

It is an object of the present invention to overcome or at least alleviate the abovementioned drawbacks of the known transmission. According to the invention, this object is achieved by the measure present in the characterizing clause of Claim 1. As a result, the radial position of the tilting edge of the transverse element coincides with the radial position of the contact point of the transverse element with the pulley, or is located radially inward from such contact point within the specified range. In such specified range the invention is most effective, since at the smallest running radius of the drive belt the abovementioned moment of force and therefore the abovementioned tendency to tilting are greatly reduced. This also creates the advantageous possibility of reducing the size of the projection.

The present invention is explained in more detail below by way of example with reference to appended figures, in which:
Figure 1 diagrammatically depicts a cross section taken transversely to the axles of a continuously variable transmission provided with two pulleys and a drive belt according to the prior art,
Figure 2 shows a cross section with a spherically shaped running surface of the pulley in accordance with Figure 1, as seen in the tangential direction,
Figure 3 shows a front view of a transverse element of the drive belt according to the invention, as seen in the direction of movement or circumferential direction of the drive belt,
Figure 4 shows a side view of the transverse element from Figure 3, and
Figure 5 shows a more detailed view of the primary pulley from Figure 1.

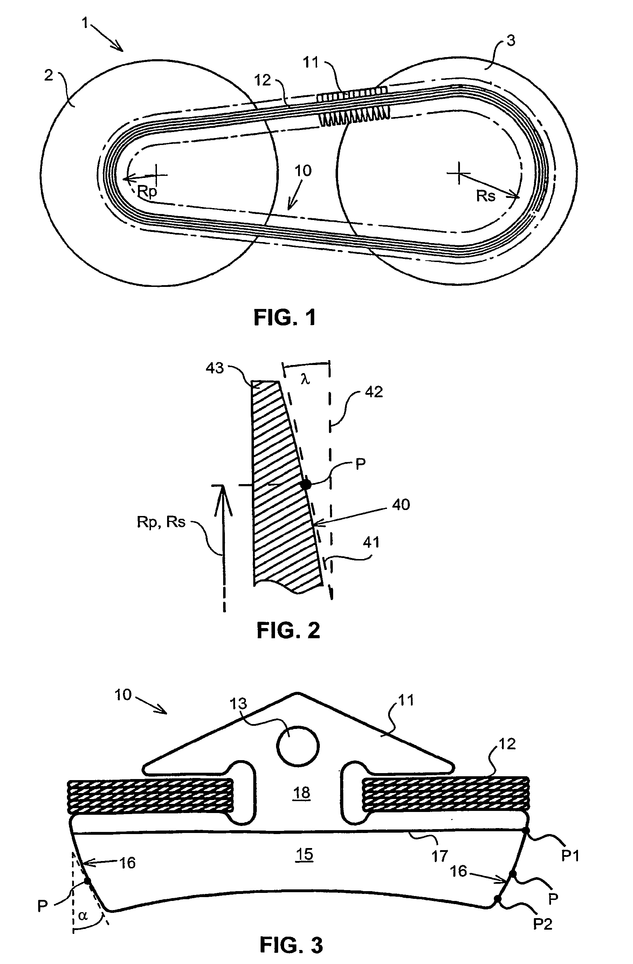

Figure 1 diagrammatically depicts a cross section through a continuously variable transmission 1 in accordance with the prior art. The known transmission 1 comprises a primary pulley 2, which can be driven by an engine (not shown), with a primary couple (of forces) Tp, and a secondary pulley 3, which can drive a load (not shown), with a secondary couple Ts. Both pulleys 2, 3 are provided with a substantially conical pulley sheath which is fixedly secured to the respective pulley axle and with a likewise substantially conical pulley sheave which can be displaced in the axial direction with respect to the said axle. A drive belt 10 is clamped between the pulley sheaves of the two pulleys 2, 3, this drive belt in each case describing a path which is substantially in the form of a segment of a circle, i.e. running radius R. A mechanical power can be transmitted between the two pulley axles with the aid of friction between the drive belt 10 and the pulleys 2, 3, the transmission ratio of the transmission 1 being given by the quotient of the running radii Rp and Rs of the drive belt at the location of the primary and secondary pulleys 2 and 3, respectively.

It is known from the prior art to design the conical surface of the sheaves 43 of the two pulleys 2, 3 to be spherical or convex, as is diagrammatically depicted in Figure 2. Figure 2 shows a cross section through a pulley sheave 43 of this type, the conical surface or drive belt running surface of which, referred to as the running surface 40 for short, has a slightly convexly curved conical shape. It can be seen from this figure that at each point P on the running surface 40 a tangent line 41 on the said running surface forms an acute angle λ with a line 42 which runs purely in the radial direction. In other words, this pulley angle λ, as it is known, increases at an increasing radial position from a possible point of contact P between the pulley sheave 43 and the drive belt 10, i.e. the running radius Rp, Rs thereof.

One example of a type of drive belt 10 which is in widespread use, what is known as the push belt 10, is shown in cross section in Figure 3. This push belt 10 is characterized, inter alia, by a series of transverse elements 11, lateral sides or flanks 16 of which are intended for contact with the sheaves 43 of the pulleys 2, 3 of the transmission 1. The push belt 10 also comprises a continuous tensioning element 12, which in this example is formed by two groups of a number of nested, flat, relatively thin rings made from metal. The transverse elements 11 are in this case held in the push belt 10 such that they can move with respect to the circumferential direction of the tensioning element 12.

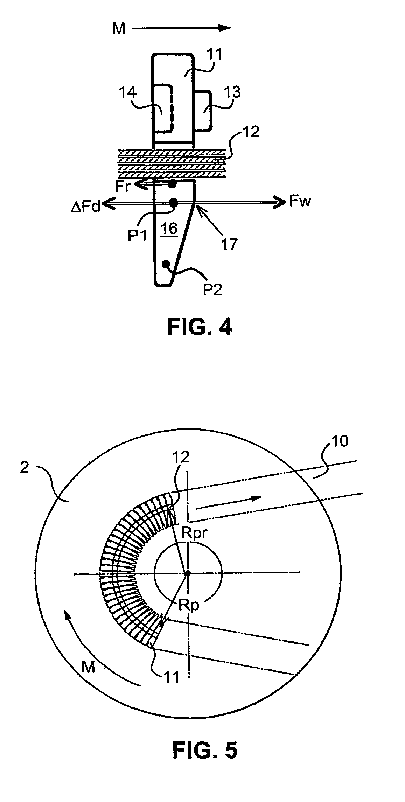

As can be seen in the side view of a transverse element 11 presented in Figure 4, the transverse element is also provided, on a main surface thereof, with a protuberance 13 in the circumferential direction of the drive belt 10, i.e. projection 13, and with a recess 14 arranged in an opposite main surface of the element 11. The projection 13 and recess 14 serve to stabilize adjacent transverse elements 11 with respect to one another. More particularly, the interaction between the projection 13 and the recess 14 prevents and/or limits movement of adjacent transverse elements 11 with respect to one another in an imaginary plane perpendicular to the circumferential direction of the drive belt 10, with the result that a rotational or tilting movement of the element 11 about an axially oriented axis is also limited.

The transverse elements 11 are also provided with what is known as a tilting edge 17, namely a generally slightly rounded transition between a top side 18 of the transverse element 11 of constant thickness and an at least effectively tapering underside 15, which extends in the front or rear surface between the flanks 16. The tilting edge 17 permits a tilting or rolling movement between adjacent transverse elements 11 in the drive belt 10, so that the latter can follow a circumferentially curved path at the location of the pulleys 2, 3. It should be noted that in the context of the present invention the abovementioned running radius Rp, Rs of the drive belt 10 is defined as the radial position of the tilting edge 17 of the transverse elements 11.

To allow optimum interaction with the convex running surface 40 of the pulleys 2, 3, the flanks 16 of the transverse elements 11 are also curved in the radial direction, a flank 16, at the location of a possible contact point P with the pulley sheave 43, being oriented at what is known as a flank angle α with respect to the radial direction. A region of the flank angle α which is defined by the flank in this case obviously at least corresponds to the region of the pulley angle λ defined by the pulley sheaves, but varies in the opposite direction (i.e. the flank angle α decreases in the radially outward direction).

During operation, the transverse elements 11 are clamped between the sheaves 43 of the two pulleys 2, 3 and follow the direction of rotation M of these pulleys 2, 3, with a rotation and couple Tp, Ts being transmitted between the said pulley axles with the aid of friction. In the process, a pushing force Fd is built up between the transverse elements 11 on the primary pulley 2 at the location of the tilting edge 17, the level of which pushing force is dependent on the primary couple T and the running radius Rp of the drive belt at the location of the said primary pulley 2. As a result of the pushing force Fd, the transverse elements 11 advance one another in the circumferential direction of the drive belt 10, towards the secondary pulley 3, guided by the tensioning element 12. Frictional contact between the transverse elements 11 and the sheaves 43 of the secondary pulley 3 then at least completely breaks down the abovementioned pushing force Fd.

A separate transverse element 11 is in the process subject to a pushing force Fd directed forwards (i.e. in the direction of rotation M indicated in Figure 4) from a transverse element 11 located behind it, as seen in the direction of rotation M, and itself exerts a pushing force Fd on a transverse element 11 located in front of it, as seen in the direction of rotation M, the difference ΔFd between these two pushing forces Fd amounting to the resultant pushing force ΔFd acting on the said separate transverse element 11 (illustrated in Figure 4 by the arrow ΔFd), which resultant pushing force thus acts on the tilting edge 17 at the level of the latter. This resultant pushing force ΔFd can arise by virtue of the transverse element 11 being clamped between the sheaves 43 of the respective pulley 2, 3, so that a frictional force Fw (illustrated in Figure 4 by the arrow Fw) is generated between a respective pulley sheave 43 and flank 16 of the transverse element 11, which frictional force of course engages on the flanks 16 at the level of the said contact point P.

It can be seen from Figure 3 that in the present transmission 1 a radial position of the contact point P, P1 or P2 on the flanks 16 of the transverse elements 11 with the running surface 40 of the various pulley sheaves 43 varies as a function of the running radius Rp, Rs of the drive belt 10, on account of the pulley angle λ increasing in the radially outward direction. At the smallest running radius Rp, Rs which occurs, the relevant contact point P1 is located in the vicinity of the radially outwardly directed end of the flank 16, while the relevant contact point P2 at the largest running radius Rp, Rs which occurs is located in the vicinity of the radially inwardly directed end of the flank 16. In other words, in all transmission ratios of the transmission 1, the transverse element 11 will tend to tilt under the influence of the resultant pushing force ΔFd which acts at the level of the tilting edge 17 and represents a moment of force with respect to the associated contact point P, P1 or P2 on the flanks 16 of the transverse elements 11 through which the imaginary axis of rotation of the transverse elements 11 passes.

To minimize this disadvantageous susceptibility to tilting, it is obvious to minimize the said moment of force by positioning the tilting edge 17 radially between the outermost contact points P1 and P2, in such a manner that the maximum radial distance which occurs between them (i.e. the arm of the moment of force) is minimized. However, the Applicant has found that at least when the transmission 1 is used in motor vehicles, by far the highest forces occur at the location of the primary pulley 2 and at the smallest possible running radius Rp of the drive belt 10. After all, the maximum engine torque Tp which occurs is more or less independent of the transmission ratio of the transmission 1, while the buildup of the pushing force which occurs per transverse element 11 (i.e. the resultant pushing force ΔFd) increases with a decreasing primary running radius Rp, on account of the number of transverse elements 11 clamped between the pulley sheaves 43 of the primary pulley 2 then decreasing. This applies all the more so if the motor vehicle is provided with what is known as a torque converter, which generally boosts the engine torque Tp to the maximum extent precisely at the smallest primary running radius Rp. Consequently, this is the situation in which the maximum load on the projection 13 occurs. To lower this maximum load, thereby creating the option of reducing the size or dimensions of the projection 13 and also of the transverse element 11 as a whole, which is advantageous, and of improving the efficiency of torque transmission, the present invention proposes that the transmission 1 be designed in such a manner that at the smallest running radius Rp on the primary pulley 2 the radial position of the tilting edge 17 is located at a very short radial distance from the point of contact P1 between the pulley sheaves 43 and the flanks 16, i.e. at this smallest running radius Rp the resulting pushing force ΔFd acts at the level of the point of engagement of the frictional force Fw on the respective transverse elements 11.

According to a more detailed consideration in accordance with the present invention, the point of contact P1 which has just been mentioned is located at least at a certain distance radially outside the tilting edge 17. A relatively low frictional force Fr, at least compared to the resultant pushing force ΔFd, between the tensioning element 12 and the transverse elements 11, which occurs when the transmission 1 is operating, is also taken into account in this more detailed consideration. As indicated by the arrow Fr in Figure 4, this frictional force Fr which has just been mentioned is a factor in determining the moment of force which is exerted on a transverse element 11 with respect to the imaginary axis of rotation passing through the respective points of contact P, P1 or P2 on the flanks 16 thereof. The frictional force Fr which has just been mentioned, at least in the abovementioned situation of the smallest possible running radius Rp, acts on the primary pulley 2 in the same direction as the resultant pushing force ΔFd, so that the said moment of force can then be eliminated or at least greatly reduced, by positioning the point of engagement of the frictional force Fw exerted by the pulley sheaves 43 on the transverse element 11, i.e. the radial position of the point of contact P1, between the tilting edge 17 and the point of engagement of the frictional force Fr exerted by the tensioning element 12 on the transverse element 11.

It should be noted that the original of the frictional force Fr between the tensioning element 12 and the transverse elements 11 can be understood as follows. Figure 5 shows, for the primary pulley 2, that in the present type of drive belt 10 the radial position Rpr of the tensioning element 12 is slightly greater than the running radius Rp defined for the drive belt 10, for example 1 mm. The same is true of the corresponding radial position Rsr and the running radius Rs at the location of the secondary pulley 3. In actual fact, this means that a transmission ratio between the primary pulley 2 and the secondary pulley 3 of the tensioning element 12, i.e. the quotient of the said radial positions Rpr and Rsr, deviates from the transmission ratio of the transverse elements 11, i.e. the quotient of the said running radii Rp and Rs. As a result, during operation, i.e. during rotation of the drive belt 10 in the transmission 1, a slip, i.e. a difference in velocity, occurs between the transverse elements 11 and the tensioning element 12 at the location of one pulley 2, 3. In the abovementioned situation of the smallest possible running radius Rp on the primary pulley 2, the tensioning element 12 adopts the speed of revolution of the transverse elements 11 at the location of the secondary pulley 3, and the said slip occurs at the location of the primary pulley 2. Based on the two said transmission ratios, it is then possible to calculate that at that location the speed of revolution of the tensioning element 12 is lower than that of the transverse elements 11, so that the frictional force Fr which is then exerted on the transverse elements 11 is directed towards the rear, i.e. in the direction of the pushing force Fd.

## Claims

1. Continuously variable transmission (1) for motor vehicles, provided with a drive belt (10) and with a primary pulley (2) and a secondary pulley (3), each comprising two substantially conical pulley sheaves (43), between which the drive belt (10) is held at a variable radial position (Rp, Rs), the drive belt (10) being provided with transverse elements (11) which are held such that they can move along a tensioning element (12) of the drive belt (10) and which, at least when the transmission (1) is operating, at the location of lateral sides (16), i.e. flanks (16), thereof, are alternately clamped between the pulley sheaves (43) of the primary pulley (2) and of the secondary pulley (3), and which transverse elements (11) are provided with a tilting edge (17) which extends between the flanks (16) and forms a transition between a top side (18) of the transverse element (11) of constant thickness and an effectively tapering underside (15) thereof, and in which transmission (1) both a conical surface (40) of at least one pulley sheave (43) of the two pulleys (2, 3) and a flank (16) of the transverse elements (11) of the drive belt (10) that arrive into contact therewith are provided with a convex curvature extending in the radial direction, **characterized in that,** said convex curvatures of the at least one pulley sheave (43) and of the flank (16) are mutually adapted such that in the minimum possible radial position (Rp, Rs) of the drive belt (10) when in contact with the said sheave (43), a radial position on the flank (16) of a contact point (P1) there between lies in a range of radial positions starting from and including the radial position of the said tilting edge (17) and extending radially outwards there from and ending halfway between the tilting edge (17) and a support surface of the transverse element (11) for contacting the tensioning element (12).

2. Transmission (1) according to Claim 1, **characterized in that** the said respective pulley (2, 3) is the primary pulley (2) which, during operation, is driven directly by an engine of the motor vehicle.

## Patentansprüche

1. Stufenloses Getriebe (1) für Kraftfahrzeuge, das mit einem Antriebsriemen (10) und mit einer Primärrolle (2) und einer Sekundärrolle (3) versehen ist, die jeweils zwei im Wesentlichen konische Rollenscheiben (43) umfassen, zwischen denen der Antriebsriemen (10) in einer variablen radialen Position (Rp, Rs) gehalten wird, wobei der Antriebsriemen (10) mit Querelementen (11) versehen ist, die so gehalten werden, dass sie sich entlang einem Spannelement (12) des Antriebsriemens (10) bewegen können, und die zumindest bei Betrieb des Getriebes (1) an ihren Lateralseiten (16), d.h. Flanken (16), alternierend zwischen die Rollenscheiben (43) der Primärrolle (2) und der Sekundärrolle (3) geklemmt sind, und wobei die Querelemente (11) mit einem Kipprand (17) versehen sind, der zwischen den Flanken (16) verläuft und einen Übergang zwischen einer Oberseite (18) des Querelements (11) mit konstanter Dicke und einer sich effektiv verjüngenden Unterseite (15) davon bildet, und wobei in dem Getriebe (1) sowohl eine konische Fläche (40) mindestens einer Rollenscheibe (43) der beiden Rollen (2, 3) als auch eine Flanke (16) der Querelemente (11) des Antriebsriemens (10), die damit in Berührung kommen, mit einer konvexen Krümmung versehen sind, die sich in der Radialrichtung erstreckt, **dadurch gekennzeichnet, dass** die konvexen Krümmungen der mindestens einen Rollenscheibe (43) und der Flanke (16) bezüglich einander so ausgeführt sind, dass in der kleinstmöglichen Radialposition (Rp, Rs) des Antriebsriemens (10) bei Berührung mit der Rolle (43) eine radiale Position auf der Flanke (16) eines Berührungspunkts (P1) dazwischen in einem Bereich radialer Positionen liegt, der bei einschließlich der radialen Position des Kipprands (17) beginnt und sich davon radial nach außen erstreckt und auf halbem Wege zwischen dem Kipprand (17) und einer Stützfläche des Querelements (11) zum Berühren des Spannelements (12) endet.

2. Getriebe (1) nach Anspruch 1, **dadurch gekennzeichnet, dass** die entsprechende Rolle (2, 3) die Primärrolle (2) ist, die während des Betriebs durch einen Motor des Kraftfahrzeugs direkt angetrieben wird.

## Revendications

1. Transmission à variation continue (1) pour véhicules à moteur, dotée d'une courroie d'entraînement (10) et d'une poulie principale (2) et d'une poulie secondaire (3), chacune comprenant deux disques de poulie (43) sensiblement coniques, entre lesquels la courroie d'entraînement (10) est maintenue à une position radiale variable (Rp, Rs), la courroie d'entraînement (10) étant munie d'éléments transversaux (11) qui sont maintenus de telle sorte qu'ils puissent se déplacer le long d'un élément tendeur (12) de la courroie d'entraînement (10) et qui, au moins lorsque la transmission (1) fonctionne, au niveau de leurs côtés latéraux (16) c'est-à-dire de leurs flancs (16), sont serrés en alternance entre les disques de poulie (43) de la poulie principale (2) et de la poulie secondaire (3), et lesdits éléments transversaux (11) étant munis d'un bord d'inclinaison (17) qui s'étend entre les flancs (16) et forme une transition entre un côté supérieur (18) de l'élément transversal (11) d'épaisseur constante et un côté inférieur (15) effectivement biseauté de celui-ci, et, dans ladite transmission (1), à la fois une surface conique (40) d'au moins un disque de poulie (43) des deux poulies (2, 3) et un flanc (16) des éléments transversaux (11) de la courroie d'entraînement (10) qui viennent en contact avec celle-ci sont dotés d'une courbure convexe s'étendant dans la direction radiale, **caractérisée en ce que** lesdites courbures convexes dudit au moins un disque de poulie (43) et du flanc (16) sont mutuellement adaptées de telle sorte que, dans la position radiale minimale (Rp, Rs) de la courroie d'entraînement (10) lorsqu'elle est en contact avec ledit disque (43), une position radiale sur le flanc (16) d'un point de contact (P1) entre ceux-ci se situe dans une plage de positions radiales débutant à la position radiale dudit bord d'inclinaison (17) incluse et s'étendant radialement vers l'extérieur à partir de celle-ci et se terminant à mi-chemin entre le bord d'inclinaison (17) et une surface de support de l'élément transversal (11) destinée à se trouver en contact avec l'élément tendeur (12).

2. Transmission (1) selon la revendication 1, **caractérisée en ce que** ladite poulie respective (2, 3) est la poulie principale (2) qui, lors du fonctionnement, est entraînée directement par un moteur du véhicule à moteur.
